# EUROPÄISCHE PATENTANMELDUNG

(11) **EP 4 112 758 A1**
(43) Veröffentlichungstag der Anmeldung: **04.01.2023**
(21) Anmeldenummer: 22176462.4
(22) Anmeldetag: 31.05.2022
(51) Int. Cl.: C22B 7/00, B09B 3/40, C22B 7/04, B09B 101/75

(54) **VERFAHREN ZUR VERWERTUNG VON CARBONFASERN (CF) ODER CARBONFASERVERSTÄRKTEN KUNSTSTOFFEN (CFK)**

(30) Priorität: 08.06.2021 DE 102021114676
(71) Anmelder: Technische Universität Bergakademie Freiberg, 09599 Freiberg (DE); Karlsruher Institut für Technologie, 76131 Karlsruhe (DE)
(72) Erfinder: CHARITOS, Alexandros, 09599 Freiberg (DE); BLENAU, Ludwig, 09599 Freiberg (DE); STELTER, Michael, 09599 Freiberg (DE); STAPF, Dieter, 67435 Neustadt (DE); BAUMANN, Werner, 76228 Karlsruhe (DE); WEXLER, Manuela, 76135 Karlsruhe (DE)
(74) Vertreter: Kailuweit & Uhlemann Patentanwälte Partnerschaft mbB

(57) **Zusammenfassung**

Verfahren zur Verwertung und/oder Entsorgung von kohlenstoffhaltigen Carbonfasern (CF) und carbonfaserhaltigen und/oder carbonfaserverstärkten Kunststoffen (CFK) in metallurgischen Schlackensystemen, durch Oxidation des Kohlenstoffs in einer schmelzflüssigen Schlackenphase, wobei mindestens eine Schlacke und/oder mindestens ein Schlackenbildner und/oder mindestens eine schmelzflüssige Schlacke in einem Reaktorraum eines geeigneten Aggregats auf eine Temperatur von 1000 bis 2500°C gebracht werden, um eine schmelzflüssige Schlackenphase zu erhalten und CF und/oder CFK in und/oder auf die schmelzflüssige Schlackenphase eingebracht und mit dieser zu einer Reaktionsmischung gemischt werden, wobei eine kontinuierliche Durchmischung der Reaktionsmischung unter Bildung von Turbulenzen erfolgt, wobei der Kohlenstoff der CF und/oder CFK zu CO und/oder CO₂ oxidiert wird, , wobei a) mindestens eine Schlacke und/oder mindestens ein Schlackenbildner und/oder mindestens eine schmelzflüssige Schlackenphase und/oder mindestens eine schmelzflüssige Schlackenphase mindestens ein durch Kohlenstoff reduzierbares Metalloxid enthält und/oder der Schlacke und/oder dem Schlackenbildner und/oder der schmelzflüssigen Schlacke und/oder der schmelzflüssigen Schlackenphase mindestens ein durch Kohlenstoff reduzierbares Metalloxid zugegeben wird.

## Beschreibung

Die Erfindung betrifft ein Verfahren zur Verwertung von Carbonfasern oder carbonfaserverstärkten Kunststoffen in metallurgischen Schlackensystemen.

Carbonfasern (CF, auch Kohlenstofffasern genannt) sind industriell gefertigte Fasern aus organischen Ausgangsmaterialien, die per Definition einen Kohlenstoffgehalt von mindestens 92 wt.-% aufweisen. Dabei haben das Ausgangsmaterial und die Herstellungsbedingungen entscheidenden Einfluss auf die Struktur der Carbonfasern und damit auf deren Eigenschaften (P. Morgan (2005): Carbon fibers and their composites. Taylor & Francis Group: Boca Raton, FL, USA. ISBN 978-0-8247-0983-9, S.J. Park (2015): Carbon Fibers. Springer: Dordrecht. ISBN 978-9-401-79477-0).

Carbonfaserverstärkter Kunststoff (CFK, auch Kohlenstofffaserverstärkter Kunststoff genannt) ist ein Verbundwerkstoff, bei dem CF in eine Kunststoff-Matrix eingebettet sind. CFK sind eine Spezialform von Kohlenstofffaserhaltigen Kunststoffen Im Allgemeinen können kohlenstofffaserverstärkte Kunststoffe als Faser-Kunststoff-Verbundwerkstoffe bezeichnet werden, bei welchen eine Vielzahl von Kohlenstofffasern, vorzugsweise in mehreren Lagen, als Verstärkung in eine Matrix, wie Kunststoff, eingebettet werden. Die Matrix dient unter anderem zur Kraftübertragung zwischen den Fasern, der Gestaltung des Bauteils und dem Schutz der Fasern. Als Kunststoffmatrix können sowohl Duromere, wie Epoxidharze, Acrylate und Polyurethane, als auch Thermoplaste, wie Acrylnitril-Butadien-Styrol (ABS), Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC), verwendet werden. Es ist jedoch auch möglich, Kohlenstofffasern in eine Matrix aus Keramik (synonym auch als keramische Faserverbundstoffe bezeichnet) einzubetten, um thermisch sehr belastbare Bauteile, wie Bremsscheiben, zu erhalten.

Kohlenstofffaserverstärke Kunststoffe weisen eine hohe Festigkeit und Steifigkeit bei gleichzeitig geringem Gewicht auf und werden vorzugsweise in Bereichen eingesetzt, wo hohe gewichtsspezifische Festigkeiten und Steifigkeiten erforderlich sind. Beispielsweise werden CFK in der Luft- und Raumfahrt, in der Windkraftindustrie, im Fahrzeugbau oder für Sportgeräte verwendet. Im Bauwesen können kohlenstofffaserverstärke Kunststoffe in Form von Lamellen oberflächlich auf die Bauteiloberfläche geklebt werden, um Bauwerke zu verstärken.

Nachteilig gilt die Entsorgung und/oder Verwertung der CF und CFK allerdings bislang noch als sehr komplex in der Umsetzung. Ein großer Nachteil ist die fehlende Entsorgungsmöglichkeit von CF und CFK. Neben sehr komplexen Recyclingverfahren mit niedrigqualitativerem Produkt, ist eine klassische Entsorgung zum jetzigen Zeitpunkt nicht möglich.

Eine energetische Verwertung von CF-haltigen Abfällen in Hausmüllverbrennungsanlagen (MVA) oder Sondermüllverbrennungsanlagen (SVA) nach Stand der Technik ist nicht möglich, da ein Großteil der CF nahezu unverändert aus dem Brennraum mit der Rostaschen, bzw. Schlacke ausgetragen wird (J. Stockschläder, P. Quicker, C. Thiel, M. Beckmann, W. Baumann, M. Wexler, D. Stapf, R Koralewska (2019): Carbonfaserhaltige Abfälle in der thermischen Abfallbehandlung - Zwischenergebnisse aus Untersuchungen im industriellen Maßstab - in Energie aus Abfall, 333-356, TK Verlag). Für CF am Ende der Lebenszyklen besteht somit bisher keine energetische Verwertungsmöglichkeit.

Weiterhin ist in Deutschland eine Deponierung von CFK nach Deponieverordnung nur unter besonderen Umständen erlaubt, sodass CF/CFK haltige Abfälle (z.B. Rotorblätter von Windenergieanlagen) aktuell gelagert werden. Die Entsorgung von CFK-haltigen Kunststoffabfällen auf Mülldeponien ist jedoch aufgrund der darin enthaltenen wertvollen Kohlenstofffasern unwirtschaftlich und auch nicht zulässig.

Weiterhin wird im Allgemeinen erwartet, dass die CFK-haltigen Kunststoffabfälle aufgrund ihrer chemischen Inertheit über einen langen Zeitraum hinweg unverändert bleiben und auf Mülldeponien nicht abgebaut werden können. Darüber hinaus ist eine unbegrenzte Verwertung von CFK-haltigen Abfällen aufgrund von gesetzlichen Vorschriften in vielen europäischen Ländern nicht ohne Weiteres möglich.

Die Bund/Länder-Arbeitsgemeinschaft Abfall hat im Jahr 2019 Empfehlungen zum Umgang mit CF-haltigen Abfällen, sowie weiterführende Forschungsbedarfe definiert (Bund/Länder-Arbeitsgemeinschaft Abfall (Hg.) (2019): Entsorgung faserhaltiger Abfälle. Abschlussbericht. Online verfügbar unter https://www.laga-online.de/documents/bericht-laga-ausschuss-entsorgung-faserhaltige-abfaelle_juli-2019_1574075541.pdf, zuletzt geprüft am 31.08.2020).

Durch die spezielle Struktur der CF/CFK sind herkömmliche Verbrennungsprozesse für CF und CFK nicht geeignet. Grund dafür ist u.a., dass die Fasern bei sehr hohen Temperaturen von bis zu 3000°C hergestellt werden und die Prozessparameter von Abfallverbrennungsanlagen (Temperatur, Verweilzeit im Reaktionsraum, Sauerstoffangebot) nicht ausreichen, um die Fasern vollständig abzubauen.

Nachteilig können CF und/oder CFK durch die Kombination von mechanischer und thermischer Beanspruchung der Fasern in solchen Verbrennungsanlagen potentiell gefährliche, lungengängige Fasern bilden.

Aktuell gibt es zur Verwertung von CFK in Deutschland eine Pyrolyseanlage. Bei diesem Verfahren wird die Kunststoffmatrix bei Temperaturen im Bereich von 450-600 °C in inerter Atmosphäre zersetzt und die C-Fasern werden freigelegt.

EP2783764A1 betrifft eine Pyrolyseanlage zur Rückgewinnung (Rezyklierung) von Kohlenstofffasern aus kohlenstofffaserhaltigen Kunststoffen, welche unter anderem einen indirekt beheizten Drehrohrofen mit Austrittsöffnungen aufweist. Bei Einsatz des indirekt beheizten Drehrohrofens kann der Sauerstoffgehalt innerhalb des Aggregates kontrolliert werden. Zudem wird durch die gleichmäßige Durchmischung des CFK-Materials infolge des Drehrohrofens eine gleichmäßige Erwärmung und somit eine gleichmäßige Pyrolyse der Kunststoffmatrix gewährleistet.

Elkoumy, M.M. et al (Simulation of EAF refining stage, Ain Shams Engineering Journal 2018, 9, 2781-2793) beschreiben Elektrolichtbogenöfen (EAF) für den Einsatz in der Metallurgie.

Die CF werden in Pyrolyseanlagen werkstofflich recycelt, dies ist jedoch mit Veränderungen der Produkteigenschaften der rezyklierten CF im Vergleich zu Neuware verbunden. Aus diesem Grund ist die Marktnachfrage gering (T. Seibel, https://www.springerprofessional.de/werkstoffrecycling/rohstoffe/noch-fehlt-der-markt-fuerrecycelte-c-fasern/15532842, zuletzt aktualisiert am 14.03.2018, zuletzt geprüft am 23.12.2020).

Weitere Verfahren, wie beispielsweise zur solvolytischen Zersetzung der Kunststoffmatrix werden beforscht, sind jedoch noch nicht über Laboruntersuchungen hinausgegangen.Eine weitere Möglichkeit der Verwertung von Kohlenstoffhaltigen Materialien ist deren Erhitzung in sauerstoffhaltiger Atmosphäre bis hin zur Oxidation des Kohlenstoffs, sodass dieser letztendlich verbrannt wird.

US3,982,559 beschreibt ein Verfahren zum Schmelzen metallhaltiger Ausgangsstoffe, wie Erzen, indem ein gepulvertes mineralisches Material mit einem Fließmittel, einem Brennstoff wie beispielsweise pulverförmiger Kohle, und einem sauerstoffhaltigen Gas in geschmolzene Schlacke eingetragen wird. Die im Erz enthaltenen Metalloxide werde zu den elementaren Metallen reduziert.

EP0508501A1 offenbart ein Verfahren zur Reduktion von NE-Metalloxiden in Schlacken durch Einblasen kohlenstoffhaltiger Reduktionsmittel und sauerstoffhaltigem Gas mittels Düsen in eine Metallschicht.

Die USA4 574 714 offenbart ein Verfahren zum Aufarbeiten von anorganischem Flüssigabfall, enthaltend Kohlenstoff, das auf der Verwendung eines Metallschmelzenbades basiert, das typischerweise wenigstens 10% Eisen aufweist. Das Verfahren beinhaltet das Halten des Bades auf einer hohen Temperatur von bis zu etwa 2200°C sowie das Injizieren von organischem Abfall und sauerstoffhaltigem Gas in das Bad von oberhalb und/oderunterhalb der Oberfläche des Bades, um resultierende Kohlenstofffragmente des organischen Abfalls unter Wärmeeinwirkung aufzubrechen (Pyrolyse) und wenigstens teilweise zu oxidieren. Die Menge des dem Bad zugesetzten sauerstoffhaltigen Gases wird derart gewählt, dass das stöchiometrische Verhältnis von Sauerstoff zu dem oxidierbaren Anteil des organischen Abfalls wenigstens 1:1 beträgt, um sicherzustellen, dass ausreichend Sauerstoff zugeführt wird, um die oxidierbaren Anteile in und über der Oberfläche des Bades vollständig zu oxidieren.

EP 0571577 offenbart ein Verfahren für flüssigen organischen Abfall, mit freiem Kohlenstoff. Der organische Abfall wird durch ein Bad aus geschmolzenem Metall und Schlacke hindurch nach oben injiziert und dadurch unter Wärmeeinwirkung gespalten. Oxidierbare Materialien in den thermischen Spaltprodukten werden über dem Bad oxidiert, indem sauerstoffhaltiges Gas in einen Reaktorraum über dem Bad injiziert wird.

DE102017122167 B3 beschreibt ein Verfahren zur Verwertung von CFK-haltigen Abfällen bei der Herstellung von Calciumcarbid im Elektroniederschachtofen. Dabei ersetzen die CFK-haltigen Abfälle Schwarzstoffe (Mischungen aus diversen Kohlen, Koksen und Anthrazit) und reagieren mit Branntkalk zu Calciumcarbid unter der Freisetzung von Carbidofengas. Die Zugabe der CFK-haltigen Abfälle kann gemeinsam mit dem Branntkalk als Möller erfolgen, oder über eine Hohlelektrode des Ofens in die Ofenschüttung gebracht werden.

DE102015011067A1 offenbart ein Verfahren zur Brikettierung feinkörniger, metallhaltiger Legierungszuschläge für metallurgische Prozesse, wobei CF-haltige Abfälle als Strukturbildner zugemischt wurden - zur mechanischen Verfestigung der Briketts. Die CF sorgen zudem für eine verzögerte Freisetzung des erforderlichen Kohlenstoffs. EP0693005B1 beschreibt ein Verfahren zur Verwertung von kohlenstoffhaltigem Material, das mit toxischen Elementen verunreinigt ist. Dabei wird das kohlenstoffhaltige Material in einem Reaktor mit von oben eintauchender Lanze geschmolzen, unter Injektion von Sauerstoff. Das Schmelzen erfolgt zur Bildung oder in der Gegenwart einer Fluidschlacke durch Zugabe eines geeigneten Flussmaterials. Das sauerstoffhaltige Gas wird durch eine von oben eintauchende Injektion in die Schlacke zugeführt, um den Kohlenstoffgehalt des kohlenstoffhaltigen Materials zu verbrennen, wobei der Kohlenstoff somit wenigstens zum Teil für den Brennstoffbedarf des Verfahrens verwendet wird.

Viele Öfen sind bewusst so ausgelegt, dass sich eine schützende und thermisch dämmende Schaumschlackeschicht auf der Oberfläche bildet, die kaum untergemischt wird. Vielfach separieren sich Inhaltsstoffe in dieser oben liegenden Schaumschlackeschicht.

Aufgabe der Erfindung ist es, die Nachteile des Stand der Technik zu überwinden, und ein effizientes und sicheres Verfahren zur Verwertung und/oder Entsorgung von CF/CFK bereitzustellen, wobei eine energetische und stoffliche Verwertung der CF/CFK ermöglicht wird. CF/CFKs sollen nicht austreten und in die Umgebung gelangen können.

Die Aufgabe wird gelöst durch ein Verfahren zur Verwertung von kohlenstoffhaltigen Carbonfasern und carbonfaserhaltigen und/oder carbonfaserverstärkten Kunststoffen (nachfolgend auch CF/CFK) in metallurgischen Schlackensystemen, durch Oxidation des Kohlenstoffs in einer schmelzflüssigen Schlackenphase, wobei
in Variante i)
   - mindestens eine Schlacke und/oder mindestens ein Schlackenbildner und/oder mindestens eine schmelzflüssige Schlacke in einem Reaktorraum eines geeigneten Aggregats auf eine Temperatur von 1000 bis 2500°C gebracht werden, um eine schmelzflüssige Schlackenphase zu erhalten,
      und
   - CF und/oder CFK in und/oder auf die schmelzflüssige Schlackenphase eingebracht und mit dieser zu einer Reaktionsmischung gemischt werden,
   - wobei eine kontinuierliche Durchmischung der Reaktionsmischung unter Bildung von Turbulenzen erfolgt, wobei der Kohlenstoff der CF und/oder CFK mit Sauerstoff zu CO und/oder CO₂ oxidiert wird, wobei in Ausführungsformen CO und CO₂ als Reaktionsgase ausgeleitet werden
oder in Variante ii)
   - mindestens eine Schlacke und/oder mindestens eine schmelzflüssige Schlacke und/oder mindestens ein Schlackenbildner und CF und/oder CFK zusammen in einem Reaktorraum eines geeigneten Aggregats auf eine Temperatur von 1000 bis 2500°C gebracht werden, um eine Reaktionsmischung, umfassend eine schmelzflüssige Schlackenphase und CF und/oder CFK, zu erhalten,
   - wobei eine kontinuierliche Durchmischung der Reaktionsmischung unter Bildung von Turbulenzen erfolgt, wobei der Kohlenstoff der CF und/oder CFK mit Sauerstoff zu CO und/oder CO₂ oxidiert wird, wobei in Ausführungsformen CO und CO₂ als Reaktionsgase ausgeleitet werden,
wobei in beiden Varianten i) und ii)
   a) mindestens eine Schlacke und/oder mindestens ein Schlackenbildner und/oder mindestens eine schmelzflüssige Schlacke und/oder die schmelzflüssige Schlackenphase mindestens ein durch Kohlenstoff reduzierbares Metalloxid enthält und/oder der Schlacke und/oder dem Schlackenbildner und/oder der schmelzflüssigen Schlacke und/oder der schmelzflüssigen Schlackenphase mindestens ein durch Kohlenstoff reduzierbares Metalloxid zugegeben wird.
      Bevorzugt wird zusätzlich
   b) gasförmiger Sauerstoff in den Reaktorraum eingebracht,
und wobei das Vermischen zu einer Reaktionsmischung und/oder das Durchmischen der Reaktionsmischung durch Rühren und/oder Wenden der Reaktionsmischung und/oder Einblasen eines Gases in die Reaktionsmischung erfolgt, und
wobei das Aggregat ausgewählt ist aus TSL-(Top Submerged Lance)-Öfen, BBOC-(Bottom Blown Oxygen Converter)-Öfen, Top Blown Rotary Converter-(TBRC)-Öfen, Pierce-Smith Konverter-Öfen, Noranda-Teniente-Schmelzofen, Mitsubishi-Ofen "Top Jetting Lance furnace", SKS (Shuikoushan)-Ofen, Queneau-Schuhmann-Lurgi-(QSL)-Ofen.

Erfindungsgemäß dient das Verfahren zur Verwertung und/oder Entsorgung von Carbonfasern und/oder carbonfaserhaltigen und/oder carbonfaserverstärkten Kunststoffen.

Im Sinne der Erfindung bedeutet Verwertung auch Entsorgung, Umsetzung stoffliche und/oder energetische Verwertung und/oder Weiterverwendung.

In einer Ausführungsform handelt es sich bei den CF um Carbonfasern aus CFK, wobei die Kunststoffmatrix der CFK bereits, beispielsweise oxidativ, entfernt wurde und die CF so freigelegt wurden.

In einer Ausführungsform handelt es sich bei den CFK um Carbonfasern, die in einer Matrix aus Kunststoff eingebettet sind. In einer Ausführungsform sind die Kunststoffe ausgewählt aus Polyacrylaten, Duromeren, wie Epoxidharzen, Acrylaten, Polyurethanen, Thermoplasten, wie Acrylnitril-Butadien-Styrol (ABS), Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und/oder Polyvinylchlorid (PVC).

In einer Ausführungsform werden die CF und/oder CFK vor deren erfindungsgemäßer Verwertung zerkleinert. In einer Ausführungsform erfolgt die Zerkleinerung mechanisch, beispielsweise durch Brechen, Mahlen, Schneiden, Häckseln und/oder Schreddern. Dem Fachmann sind Zerkleinerungsmethoden bekannt etc.

Je größer die Oberfläche der CF und/oder CFK ist, umso besser ist auch deren erfindungsgemäße Verwertung. In einer Ausführungsform werden die CF und/oder CFK vor ihrer Verwertung zerkleinert. In einer Ausführungsform erfolgt die Zerkleinerung zu Pulvern mit einer Korngröße von 1 µm bis 1 mm oder der Direktnutzung von Kurzfaser (Länge ≤ 1 mm). In einer Ausführungsform erfolgt die Direktnutzung von Langfasern (1 mm ≤ Länge ≤ 50 mm). In einer Ausführungsform erfolgt die Zerkleinerung zu Bruchstücken von 0,5 cm bis 1 m oder der Direktnutzung von endlosen Fasern bevorzugt bis 1 m Länge.

Erfindungsgemäß erfolgt die Verwertung und/oder Entsorgung der der CF und/oder CFK in metallurgischen Schlackensystemen.

Im Sinne der Erfindung sind Schlackensysteme Schlacken mit definierter Zusammensetzung. und/oder Schlacken enthaltende Zusammensetzungen.

Im Sinne der Erfindung handelt es sich bei Schlacken um zusammenhängende Stoffgemische, umfassend Oxide.

In einer Ausführungsform sind in der Schlacke anteilig auch feste Phasen, z.B. Magnetit zur Bildung einer Suspension enthalten und/oder dieser beigemischt.

Erfindungsgemäß wird in das Aggregat mindestens eine Schlacke oder mindestens ein Schlackenbildner oder mindestens eine schmelzflüssige Schlacke oder eine Mischung dieser in einen Reaktorraum eines geeigneten Aggregats eingebracht und dort auf eine Reaktionstemperatur von 1000 bis 2500 °C, bevorzugt 1200 bis 1800°C gebracht.

In einer Ausführungsform ist Schlacke eine glasig (eine Phase) oder kristallin (mehrphasig) erstarrte nichtmetallische Begleitphase, die beispielsweise bei der Gewinnung von Metallen in der Erzverhüttung gebildet wird.

Bei einer Schlacke handelt es sich in einer Ausführungsform um ein Stoffgemisch, enthaltend Oxide, Sulfide und Fluoride.

In eine Ausführungsform ist die mindestens eine Schlacke ausgewählt aus Schlacken der Zusammensetzung Al₂O₃-SiO₂-CaO, Cu₂O-CaO-Fe₃O₄, FeOₓ-CaO-SiP₂, FeOₓ-SiO₂-Al₂O₃-CaO-MgO. In einer Ausführungsform enthält die Schlacke PbO und/oder SnO und/oder SnO₂ und/oder ZnO und/oder B₂O₃ und/oder Na₂O.

In einer Ausführungsform enthält die Schlacke Al₂O₃ und/oder CaO und/oder SiO₂ und/oder Fe₂O₃ und/oder FeO und/oder Fe₃O₄, und/oder MgO und/oder PbO und/oder CuO und/oder Cu₂O und/oder B₂O₃ und/oder Na₂O und/oder Mischungen dieser.

In einer Ausführungsform liegt die Schlacke, insbesondere zu Beginn des Verfahrens in Form von Schlackenpartikeln, beispielweise Pulver, Bruchstücke oder Schlackenstücke regelmäßiger oder unregelmäßiger Größe und/oder Granulat, vor. In einer Ausführungsform beträgt die Größe der Schlackenpartikel 20 µm bis 50 cm, bevorzugt 50 µm - 30 cm.

In einer Ausführungsform ist die Schlacke ein reines Oxid. In einer Ausführungsform enthält die Schlacke eine Mischung mehrerer Oxide. In einer Ausführungsform enthält die Schlacke Sulfide und/oder Fluoride.

Im Sinne der Erfindung sind Schlackenbildner Verbindungen, die beim Erhitzen und/oder Schmelzen, bevorzugt in der Mischung mit Schlacke, eine zusammenhängende schmelzflüssige Schlackenphase bilden.

Im Sinne der Erfindung ist die mindestens eine schmelzflüssige Schlacke eine Schlacke der o.g. Zusammensetzung, die bis zu ihrer Schmelze erhitzt wurde.

In einer Ausführungsform stammt die schmelzflüssige Schlacke aus mindestens einem weiteren pyrometallurgischen Prozess, beispielsweise aus der Kupferherstellung, aus dem sie, ohne vorher gekühlt und damit verfestigt zu werden, direkt in den Reaktionsraum im erfindungsgemäßen Verfahren überführt oder eingebracht wird.

In einer Ausführungsform sind die Schlackenbildner ausgewählt aus Oxiden, bevorzugt ausgewählt aus Al₂O₃ und/oder CaO und/oder SiO₂ und/oder Fe₂O₃ und/oder FeO und/oder Fe₃O₄, und/oder MgO und/oder PbO und/oder CuO und/oder Cu₂O und/oder B₂O₃ und/oder Na₂O und/oder Mischungen dieser.

In einer Ausführungsform ist der mindestens eine Schlackenbildner pulverförmig.

Vorteilhaft können durch Mischen mehrerer Schlackenbildner und/oder Zugabe von mindestens einem Schlackenbildner zur Schlacke die Eigenschaften der Schlackenphase, insbesondere die Schmelztemperatur und Viskosität zur Bildung der schmelzflüssigen Schlackenphase bestimmt werden. Somit ist beispielsweise eine Anpassung an das Aggregat möglich.

Die eigentliche schmelzflüssige Schlackenphase bildet sich während des Erhitzens der Schlacke und/oder des mindestens einen Schlackenbildners und/oder der schmelzflüssigen Schlacke im Aggregat, bzw. abkühlen auf die Reaktionstemperatur, wenn die eingetragene schmelzflüssige Schlacke zu heiß ist. In einer Ausführungsform erfolgt die Zugabe von Schlackenbildnern und/oder Fließmittel erst nach Erhalt der schmelzflüssigen Schlackenphase. Dann werden diese in der Regel auch geschmolzen und in die Schlackenphase integriert.

In einer Ausführungsform werden der Schlacke und/oder mindestens einen Schlackenbildner und/oder der schmelzflüssigen Schlacke und/oder der Reaktionsmischung mindestens ein Fließmittel zugegeben.

In einer Ausführungsform ist das Fließmittel ausgewählt aus Karbonaten, z.B. CaCO₃, oder MgCO₃, Fluoriden, z.B. NaF₂, und/oder Chloriden, z.B. NaCl und KCl und/oder Mischungen dieser.

Vorteilhaft kann durch die Zugabe mindestens eines Fließmittels die Viskosität der schmelzflüssigen Schlackenphase verringert werden. Vorteilhaft kann dies eine vereinfachte Prozessführung und eine bessere Durchmischung der Reaktionsmischung ermöglichen.

Erfindungsgemäß erfolgt in der schmelzflüssigen Schlackenphase die Oxidation des Kohlenstoffs der CF und/oder CFK.

Um Kohlenstoff der CF und/oder CFK zu oxidieren, sind insbesondere hohe Temperaturen nötig. Im erfindungsgemäßen Verfahren wird die Schlacke und/oder Schlackenbildner soweit erhitzt, dass diese schmelzen und sich eine schmelzflüssige Schlackenphase bildet.

Erfindungsgemäß ist es möglich, die CF/CFK zu der schmelzflüssigen Schlacke zuzugeben (Variante i) und/oder die CF/CFK zusammen mit der Schlacke und/oder Schlackenbildnern zu erhitzen (Variante ii).

Im Folgenden soll näher auf die einzelnen Varianten eingegangen werden.

In Variante i) des Verfahrens wird erfindungsgemäß zunächst die Schlacke und/oder Schlackenbildner und/oder schmelzflüssige Schlacke in einem Reaktorraum eines geeigneten Aggregats auf Temperaturen bzw. eine Reaktionstemperatur von 1000 bis 2000°C, bevorzugt 1200 bis 1800 °C gebracht, um eine schmelzflüssige Schlackenphase zu erhalten.

Im Sinne der Erfindung bedeutet Schlacke eine zusammenhängende Phase, enthaltend Schlacke im festen Zustand, bevorzugt eine feste Phase, insbesondere bestehend überwiegend aus Oxiden. Beim Schmelzen wird diese zu einer schmelzflüssigen Schlackenphase, die auch eine flüssige Lösung darstellt.

Im Sinne der Erfindung sind Schlackenbildner Verbindungen, die beim Erhitzen und/oder Schmelzen, beispielsweise für sich oder zusammen mit einer Schlacke, eine zusammenhängende schmelzflüssige Schlackenphase bilden.

In einer Ausführungsform sind die Schlackenbildner ausgewählt aus Oxiden, bevorzugt ausgewählt aus Al₂O₃ und/oder CaO und/oder SiO₂ und/oder Fe₂O₃ und/oder FeO und/oder Fe₃O₄ und/oder MgO und/oder PbO und/oder CuO und/oder Cu₂O und/oder B₂O₃ und/oder Na₂O und/oder und/oder weitere Metalloxide, und Mischungen dieser.

In einer Ausführungsform ist der mindestens eine Schlackenbildner pulverförmig.

Vorteilhaft können durch Mischen mehrerer geeignete Schlackenbildner und/oder Zugabe von mindestens einem geeigneten Schlackenbildner zur Schlacke die Eigenschaften der Schlackenphase, insbesondere die Schmelztemperatur zur Bildung der schmelzflüssigen Schlackenphase bestimmt werden. Somit ist beispielsweise eine Anpassung an das Aggregat möglich.

Vorteilhaft können in den Reaktionsräumen solcher Aggregate Temperaturen von 1000 bis 1600°C, in einigen, z.B. EAF, SAF Ofen oder Plasma Ofen bis zu 2500°C, erzeugt werden.

Bei diesen Temperaturen schmilzt die Schlacke und/oder die Schlackenbildner und bildet eine schmelzflüssige Schlackenphase. Schmelzflüssige Schlackenphase im Sinne der Erfindung bedeutet, dass die Schlackenphase in Form eines Fluids vorliegt. In einer Ausführungsform sind in dem Fluid noch feste Schlackenbestandteile enthalten.

Erfindungsgemäß kann ebenso die Einbringung bereits schmelzflüssiger Schlacke in den Reaktionsraum erfolgen. Diese kann allein oder zusätzlich zu Schlacke und/oder Schlackenbildner eingebracht werden. Je nach Temperatur der schmelzflüssigen Schlacke muss dann die Schlackenphase noch weiter erhitzt oder gekühlt werden, um auf die Reaktionstemperatur zu kommen und eine geeignete schmelzflüssige Schlackenphase zu erhalten.

Erfindungsgemäß wird in Variante i) CF und/oder CFK in und/oder auf die schmelzflüssige Schlackenphase eingebracht und mit dieser zu einer Reaktionsmischung gemischt

In einer Ausführungsform erfolgt die Einbringung der CF und/oder CFK als Partikel mit einem Durchmesser von 0,5 µm bis 5 mm, bevorzugt 1 µm - 2 mm, besonders bevorzugt 1 µm - 2 mm oder als Kurzfaser (Länge ≤ 1 mm) oder als Langfasern (Länge 1mm ≤ 50 mm) oder als Bruchstücke von 0.5 cm bis 1 m Länge oder der Direktnutzung von endlosen Fasern bevorzugt bis 1 m Länge in den Reaktorraum direkt in die schmelzflüssige Schlacke.

In einer Ausführungsform erfolgt die Einbringung der CF und/oder CFK über eine Lanze und/oder mindestens eine Düse, die in die schmelzflüssige Schlackenphase hineinragt, bevorzugt mit oder ohne der Mitwirkung von Trägergas. In einer Ausführungsform erfolgt die Einbringung durch eine oder mehrere Düsen, die an dem Boden oder der Seitenwand oder der Seitenwände angeordnet sind, bevorzugt mit oder ohne die Mitwirkung von Trägergas.

Im Sinne der Erfindung bedeutet Trägergas ein Gas oder Gasmischung, wobei das Trägergas, bzw. das Gas oder die Gasmischung oxidierend, inert oder reduzierend ist.

In einer Ausführungsform umfasst das oxidierende Trägergas Sauerstoff oder Luft mit oder ohne Sauerstoffanreicherung. In einer Ausführungsform beträgt die Sauerstoffanreicherung in der Luft 1 bis 100 % Sauerstoff.

In einer Ausführungsform umfasst das inerte Trägergas, N₂ und/oder Ar

In einer Ausführungsform umfasst das reduzierende Trägergas CO und/oder CO₂ und/oder Synthesegas, umfassend CO, CO₂, H₂, H₂O, CH₄.

Vorteilhaft erfolgt durch den Eintrag der CF und/oder CFK zusammen mit dem Trägergas eine effiziente Durchmischung der Reaktionsmischung durch Turbulenz, sodass de CF/CFK in Kontakt mit der schmelzflüssigen Schlacke bleiben und der Kohlenstoff dort oxidiert werden kann.

In einer Ausführungsform erfolgt die Einbringung der CF und/oder CFK als Partikel mit einem Durchmesser von 0,5 µm bis 2 mm, bevorzugt 1 µm - 1 mm und/oder als Kurzfaser (Länge ≤ 1 mm) und/oder als Langfasern (1 ≤ Länge ≤ 50 mm) und/oder als Bruchstücke von 0.5 cm bis 1 m und/oder als Fasern, bevorzugt bis 1 m Länge in den Reaktorraum auf und/oder in die schmelzflüssige Schlacke. In einer Ausführungsform erfolgt dies über eine Öffnung des Reaktors oberhalb der schmelzflüssigen Schlacke.

In einer Ausführungsform erfolgt die Einbringung der CF und/oder CFK kontinuierlich oder batch-weise automatisiert, beispielsweise durch Förderband und/oder Förderschnecke und/oder oder manuell, beispielsweise durch Zuschütten.

Erfindungsgemäß werden die schmelzflüssige Schlacke und die CF/ CFK zu einer Reaktionsmischung vermischt und anschließend, bevorzugt kontinuierlich, durchmischt.

Erfindungsgemäß erfolgt eine Durchmischung der Reaktionsmischung.

Vorteilhaft wird eine Entmischung der Reaktionsmischung, das heißt, teilweise oder vollständige Auftrennung von schmelzflüssiger Schlackenphase und CF und/oder CFK verhindert. Vorteilhaft wird damit auch vermieden, dass die CF über die Reaktionsgase aus dem Reaktorraum ausgetragen werden.

Ein weiterer Vorteil ist eine durch die Verhinderung der Entmischung erhöhte Verweilzeit der CF und/oder CFK in der Reaktionsmischung, bevorzugt von einer bis mehrerer Stunden, sodass diese zu einem großen Teil oder sogar vollständig umgesetzt werden können.

In einer Ausführungsform erfolgt das Vermischen zu einer Reaktionsmischung und/oder das Durchmischen der Reaktionsmischung durch Rühren, Wenden der Reaktionsmischung und/oder Einblasen eines Gases in die Reaktionsmischung, bevorzugt durch eine Lanze und/oder mindestens eine Düse.

In einer Ausführungsform ist das eingeblasene Gas das Trägergas, welches zusammen mit den CF/CFK in die Reaktionsmischung eingebracht wird.

In einer Ausführungsform erfolgt die Einbringung von CF und/oder CFK in die Reaktionsmischung kontinuierlich. In einer Ausführungsform erfolgt dabei eine kontinuierliche Durchmischung der Reaktionsmischung. So werden bereits oxidierte CF und/oder CFK durch neue CF und/oder CFK ersetzt, sodass auch diese oxidiert werden.

Erfindungsgemäß erfolgt während oder nach der Einbringung der CF und/oder CFK in die Reaktionsmischung eine kontinuierliche Durchmischung der Reaktionsmischung.

Erfindungsgemäß erfolgt die Durchmischung durch Rühren, Wenden der Reaktionsmischung und/oder Einblasen eines Gases in die Reaktionsmischung.

Die CF und/oder CFK sind aufgrund ihrer geringeren Dichte leichter als die schmelzflüssige Schlackenphase und es würde theoretisch zu einer Trennung von Schlackenphase und CF/CFK-Phase kommen, das heißt, die CF/CFK würden auf der schmelzflüssigen Schlackenphase obenauf schwimmen. Dies könnte dazu führen, dass Reaktionsprodukte, wie z.B. auch Faserbruchstücke- oder Partikel über die Reaktionsgase aus dem Reaktionsraum ausgetragen werden, was durch deren potentielle Lungengängigkeit ein erhöhtes gesundheitliches Risiko darstellen würde.

Vorteilhaft wird durch das turbulente Durchmischen der Reaktionsmischung eine Trennung von schmelzflüssiger Schlacke und CF und/oder CFK vermieden und die reagierenden CF/CFK stehen in ständigem Kontakt mit der schmelzflüssigen Schlacke.

In Variante ii) des erfindungsgemäßen Verfahrens werden eine, insbesondere noch feste, Schlacke und/oder mindestens ein Schlackenbildner und/oder eine schmelzflüssige Schlacke und die CF und/oder CFK zusammen in einem Reaktorraum eines geeigneten Aggregats auf 1000 bis 2500°C, bevorzugt 1200 bis 1800°C, gebracht.

In einer Ausführungsform erfolgt die Einbringung von CF und/oder CFK vor der Einbringung der Schlacke und/oder mindestens einen Schlackenbildners in den Reaktorraum, das heißt, CF/CFK werden im Reaktorraum vorgelegt und die Schlacke und/oder Schlackenbildner und/oder schmelzflüssige Schlacke darauf oder hinzugegeben.

In einer Ausführungsform werden CF/CFK und Schlacke und/oder Schlackenbildner und/oder schmelzflüssige Schlacke abwechselnd in den Reaktorraum geschichtet.

In einer Ausführungsform werden Schlacke und/oder Schlackenbildner und/oder schmelzflüssige Schlacke und CF/CFK vor der Einbringung in den Reaktorraum gemischt und zusammen eingetragen. In einer Ausführungsform kann nachfolgend noch weitere Schlacke und/oder Schlackenbildner und/oder schmelzflüssige Schlacke und/oder CF/CFK eingebracht werden.

Erfindungsgemäß werden Schlacke und/oder Schlackenbildner und/oder schmelzflüssige Schlacke und CF/CFK in Variante ii) zusammen auf Temperaturen bzw. eine Reaktionstemperatur von 1000 bis 2500°C gebracht, um eine Reaktionsmischung, enthaltend eine schmelzflüssige Schlackenphase und CF und/oder CFK, zu erhalten.

Erfindungsgemäß erfolgt auch in Variante ii) eine kontinuierliche Durchmischung der Reaktionsmischung. In Ausführungsformen erfolgt die Durchmischung analog Variante i).

Erfindungsgemäß wird der Kohlenstoff in der Reaktionsmischung zu CO und/oder CO2 oxidiert.

Vorteilhaft bildet die schmelzflüssige Schlacke einen stabilen Reaktionsraum zur Oxidation des Kohlenstoffs.

Für die Oxidation des Kohlenstoffs in den CF/CFK ist Sauerstoff im Reaktionsraum notwendig. Dieser wird dem Kohlenstoff zugeführt:
a) indem die mindestens eine Schlacke und/oder der mindestens einen Schlackenbildner und/oder die mindestens eine schmelzflüssige Schlacke und/oder die schmelzflüssige Schlackenphase mindestens ein durch Kohlenstoff reduzierbares, bzw. Kohlenstoff oxidierendes, Metalloxid enthält und/oder der Schlacke und/oder dem Schlackenbildner und/oder der schmelzflüssigen Schlacke und/oder der schmelzflüssigen Schlackenphase mindestens ein durch Kohlenstoff reduzierbares Metalloxid zugegeben wird.
   In einer bevorzugten Ausführungsform wird
b) gasförmiger Sauerstoff in den Reaktorraum eingebracht.

Erfindungsgemäß bedeutet dies, dass Option a) für das Verfahren in den Varianten i) oder ii) oder in beiden Varianten i) und ii) zutrifft, oder dass zusätzlich Option b) für das Verfahren in den Varianten i) oder ii) oder in beiden Varianten i) und ii) zutrifft.

Die Optionen a) und b) können also in beiden Varianten i) und ii) zum Einsatz kommen.

In einer Ausführungsform wird während des Verfahrens der Sauerstoffpartialdruck kontrolliert und bevorzugt in Option b), ohne Option a) so eingestellt, dass im Reaktorraum ein oxidierender Sauerstoffpartialdruck vorliegt.

In einer Ausführungsform beträgt der Sauerstoffpartialdruck im Reaktorraum 10⁻¹ atm bis 1 atm, in unter Druck stehenden Aggregaten auch > 1 atm.

In einer Ausführungsform wird während des Verfahrens der Sauerstoffpartialdruck kontrolliert und bevorzugt in Option a), ohne Option b) so eingestellt, dass im Reaktorraum ein reduzierender oder reduktiver Sauerstoffpartialdruck vorliegt.

In einer Ausführungsform beträgt der Sauerstoffpartialdruck im Reaktorraum < 10⁻⁴ atm (das sind 0,01 kPa), bevorzugt < 10⁻⁵ atm.

In Ausführungsformen werden CO und CO₂ als Reaktionsgase aus dem Reaktorraum geleitet und das Verhältnis der Menge an CO zu CO₂ analysiert, um darüber die Höhe des Sauerstoffpartialdrucks im Reaktorraum zu bestimmen.

In einer Ausführungsform erfolgt die Kontrolle über die Messung des Verhältnisses der Anteile von CO zu CO₂ in der Gasphase des Reaktorraums.

In einer Ausführungsform erfolgt die Einstellung des Sauerstoffpartialdrucks im Reaktorraum durch die Einbringung weiterer bzw. insbesondere bei kontinuierlicher Prozessführung, weniger CF und/oder CFK in die Reaktionsmischung.

In einer Ausführungsform erfolgt die Einstellung des Sauerstoffpartialdrucks im Reaktorraum durch die Einbringung von inertem Gas in den Reaktorraum, bevorzugt in die Reaktionsmischung. Erfindungsgemäß enthält die Schlacke und/oder der mindestens eine Schlackenbildner und/oder die schmelzflüssige Schlacke in Option a) mindestens ein durch Kohlenstoff reduzierbares Metalloxid und/oder es wird derSchlacke und/oder dem mindestens einen Schlackenbildner und/oder der schmelzflüssigen Schlacke mindestens ein durch Kohlenstoff reduzierbares Metalloxid zugegeben.

Im Sinne der Erfindung ist ein durch Kohlenstoff reduzierbares Metalloxid ein Oxid eines Metalls, das in der Lage ist, Sauerstoff an Kohlenstoff abzugeben, wobei es selbst reduziert wird. Die Metalloxide können einzeln oder als Gemische eingesetzt werden.

Alternativ kann man auch formulieren, dass das Metalloxid ein Kohlenstoff oxidierendes Metalloxid bzw. ein Sauerstoffabgebendes Metalloxid ist.

In einer Ausführungsform ist das Metall des Metalloxids ausgewählt aus allen Metallen und/oder Halbmetallen des Periodensystems.

In einer Ausführungsform ist das mindestens eine durch Kohlenstoff reduzierbare Metalloxid ausgewählt aus Fe₂O₃, FeO, Fe₃O₄, NiO, CoO, Co₃O₄, CuO, Cu₂O, WO₃, MoO₃, SnO, SnO₂, PbO, Pb₃O₄, PbO₂, Cr₂O₃ ZnO, MnO, MnO₂. Bevorzugt sind dabei die höheren Oxide der Metalle.

Das durch Kohlenstoff reduzierbare Metalloxid oder die Kohlenstoff oxidierenden bzw. durch Kohlenstoff reduzierbaren Metalloxide können bereits in der Schlacke und/oder Schlackenbildner enthalten sein. Sie können aber auch der Schlacke und/oder Schlackenbildner zugegeben werden. Es können auch bereits mindestens ein Metalloxid in der Schlacke und/oder Schlackenbildner und/oder der schmelzflüssigen Schlacke enthalten sein und mindestens ein weiteres Metalloxid zugegeben werden.

In einer Ausführungsform bildet sich mindestens ein reduzierbares Metalloxid erst durch Kontakt mit der schmelzflüssigen Schlacke und/oder der schmelzflüssigen Schlackenphase durch Zugabe eines Zufuhrstoffes, ausgewählt aus (Erz-)Konzentraten, Recyclingmaterial und/oder Sulfiden und/oder Sulfaten, SnO₂ Konzentrat, Batterieabfällen, enthaltend PbO*PbSO₄, PbSO₄ und/oder PbS , beispielsweise aus Bleikonzentraten)

In einer Ausführungsform enthält die Schlacke und/oder der mindestens einen Schlackenbildner einen Masseanteil an sauerstoffabgebenden, durch Kohlenstoff reduzierbaren, bzw. Kohlenstoff oxidierenden Metalloxiden von 0 bis 100 % der Gesamtmasse von Schlacke und/oder Schlackenbildner.

In einer Ausführungsform wird der Schlacke und/oder Schlackenbildner zusätzlich mindestens ein Metalloxid zugegeben.

In einer Ausführungsform wird, insbesondere bei kontinuierlicher Prozessführung das heißt bei kontinuierlicher Einbringung der CF und/oder CFK in die Reaktionsmischung, kontinuierlich mindestens ein durch Kohlenstoff reduzierbares Metalloxid zur Reaktionsmischung zugegeben. So wird genügend Sauerstoff über das Metalloxid in den Reaktionsraum getragen, um die CF und/oder CFK oxidieren zu können.

In einer Ausführungsform, insbesondere bei diskontinuierlicher Prozessführung, wird das Metalloxid zusammen mit der Schlacke und/oder Schlackenbildner vorgelegt und/oder ist bereits in der Schlacke enthalten. In einer Ausführungsform ist dann von Anfang an genug Sauerstoff im Metalloxid enthalten, um die eingebrachte Menge an CF und/oder CFK zu oxidieren.

In einer Ausführungsform wird der Schlacke und/oder Schlackenbildner zusätzlich die Menge an Metalloxid zugegeben, die 0 bis 100 % der Masse von Schlacke und/oder Schlackenbildner entspricht.

Da die Reaktionsmischung in Variante a) mindestens ein kohlenstoffoxidierendes Metalloxid enthält, sind aufgrund der Durchmischung der Reaktionsmischung die CF/CFK dauerhaft mit schmelzflüssiger Schlackenphase und dem Metalloxid in Kontakt. Vorteilhaft bewirkt damit die hohe thermische Energie bzw. hohe Temperatur der schmelzflüssigen Schlackenphase zusammen mit dem durch das oder die Metalloxide zur Verfügung gestellten Sauerstoff eine effiziente Oxidation des Kohlenstoffs in den CF und/oder CFK.

In einer Ausführungsform wird bei der Oxidation des Kohlenstoffs so viel thermische Energie freigesetzt, dass diese wiederum zum Energieeintrag, das heißt zum Erhitzen der Reaktionsmischung, beiträgt.

In einer Ausführungsform werden zusätzlich zu den CF und/oder CFK weitere Hilfsbrennstoffe zur Reaktionsmischung zugegeben. In einer Ausführungsform sind die Hilfsbrennstoffe ausgewählt aus z.B. Kohlenwasserstoffe im festen, flüssigen und/oder gasförmigen Zustand und/oder Wasserstoff und/oder Kohlenstoff.

Vorteilhaft dienen die Hilfsbrennstoffe unterstützend zur reduzierenden Wirkung von CF/CFK hinsichtlich der Reduktion von Metalloxiden und zur Freisetzung von thermischer Energie um das Aggregat zu erhitzen.

In einer Ausführungsform wird das erfindungsgemäße Verfahren mit Option a), aber ohne Option b) durchgeführt. Das heißt, es wird kein gasförmiger Sauerstoff zugegeben, sondern der Sauerstoff zur Oxidation des Kohlenstoffs stammt aus dem mindestens einen kohlenstoffoxidierenden Metalloxid, also aus dem in der Reaktionsmischung enthaltenen oder dem der Reaktionsmischung zugeführten kohlenstoffoxidierenden Metalloxid oder den Metalloxiden.

In einer Ausführungsform wird dann ein inertes, das heißt sauerstoffarmes oder sauerstofffreies Schutzgas, wie beispielsweise Argon oder Stickstoff, in den Reaktorraum und/oder die Reaktionsmischung eingetragen, beispielsweise eingeblasen, beispielsweise über eine Lanze, Gaseinleitungsrohr und/oder Düsen, die von unten und/oder von der Seite in den Reaktionsraum ragen.

In einer Ausführungsform erfolgt die Einbringung der CF und/oder CFK zusammen mit dem Schutzgas, beispielsweise über eine Lanze, Gaseinleitungsrohr und/oder Düsen, die von unten und/oder von der Seite in den Reaktionsraum ragen. In einer Ausführungsform erfolgt die Einbringung der CF und/oder CFK zusammen mit dem Schutzgas direkt in die schmelzflüssige Schlackenphase.

In einer Ausführungsform erfolgt die Einstellung des Sauerstoffpartialdrucks durch Zugabe von weiterem kohlenstoffoxidierenden Metalloxid und/oder Zugabe weiterer CF und/oder CFK.

Vorteilhaft erfolgt durch den Eintrag des Schutzgases eine effiziente Durchmischung der Reaktionsmischung durch Turbulenz, sodass die CF/CFK in Kontakt mit der schmelzflüssigen Schlacke bleiben und der Kohlenstoff durch den aus den Metalloxiden stammenden Sauerstoff oxidiert werden kann.

Der zur Oxidation benötigte Sauerstoff kann gemäß Option b) durch den zusätzlichen Eintrag von gasförmigem Sauerstoff in den Reaktionsraum zur Verfügung gestellt werden.

In einer Ausführungsform wird bei Variante b) in Kombination mit Variante a) der Sauerstoffpartialdruck kontrolliert.

In einer Ausführungsform beträgt der Sauerstoffpartialdruck im Reaktorraum 10⁻¹ atm bis 1 atm.

Die Oxidation des Kohlenstoffs in den CF/CFK erfolgt dann nach folgenden Gleichungen:

C_{(CF/CFK)} + O_{2 (Gas)} → CO_{2 (Gas)} (1)

C_{(CF/CFK)} + 0,5 O_{2(Gas)} → CO_{(Gas)} (2)

C_{(CF/CFK)} + CO_{2(Gas)} → 2CO_{(Gas)} (3)

Deshalb ist das Verfahren auch nach Option b) durchführbar, wobei zusätzlich gasförmiger Sauerstoff in den Reaktorraum, bevorzugt in die Reaktionsmischung, eingebracht wird.

In einer Ausführungsform wird der Sauerstoff in Form eines gasförmigen Oxidationsmediums in den Reaktorraum und/oder die Reaktionsmischung eingetragen.

In einer Ausführungsform ist das gasförmige Oxidationsmedium von Luft, O₂ angereicherte Luft, O₂-angereichertes Gas (z.B. N₂ oder Ar), Wasserdampf, CO₂ und/oder reiner Sauerstoff.

In einer Ausführungsform erfolgt die Einbringung des Sauerstoffs direkt in die Reaktionsmischung.

In einer Ausführungsform erfolgt die Einbringung des Sauerstoffs in Form eines gasförmigen Oxidationsmediums über eine Lanze, Gaseinleitungsrohr und/oder Düsen, die von unten und/oder von der Seite in den Reaktionsraum ragen.

In einer Ausführung wird kontinuierlich Sauerstoff in Form eines gasförmigen Oxidationsmediums in den Reaktionsraum und/oder in die Reaktionsmischung eingebracht. In einer Ausführungsform wird ein Kreislaufprozess, umfassend die Oxidation eines Metalloxids mit dem Sauerstoff, Reduktion des dabei entstehenden Metalloxids durch die CF und/oder CFK unter Bildung von CO und/oder CO₂ und Reoxidation der aktiven Komponente.

In einer Ausführungsform erfolgt die Durchmischung der Reaktionsmischung durch Eintrag des gasförmigen Oxidationsmediums in die Reaktionsmischung. Vorteilhaft werden dabei Turbulenzen gebildet, die für eine effiziente Durchmischung der Reaktionsmischung sorgen, sodass CF/CFK in Kontakt mit der schmelzflüssigen Schlacke und ggf. dem oder den Metalloxiden bleiben.

Vorteilhaft gelingt es dadurch, insbesondere bei Einsatz pulverförmiger CF und/oder CFK, ein Ausblasen der CF zu vermeiden und damit die gesundheitlichen Risiken, die durch Faserreste im Abgas entstehen, zu minimieren.

Vorteilhaft wird damit eine besonders hohe Effizienz in der Verbrennung des Kohlenstoffs und eventuell vorhandener Kunststoffe aus den CFK erzielt.

In einer Ausführungsform wird so viel Sauerstoff in den Reaktorraum und/oder in die Reaktionsmischung eingetragen oder durch Schutzgas verdrängt, dass der Sauerstoffpartialdruck im Reaktorraum 10 atm bis 10⁻¹⁵ atm beträgt. Vorteilhaft kann der Sauerstoffpartialdruck an die Zusammensetzung der Schlacke und/oder die oxidativen Eigenschaften des oder der Metalloxide angepasst werden, sodass stets eine effiziente Oxidation des Kohlenstoffs der CF und/oder CFK ermöglicht wird.

In einer Ausführungsform erfolgt in Variante i) die Eintragung von Sauerstoff in den Reaktorraum nach dem Eintragen CF/CFK. In einer Ausführungsform werden Sauerstoff und CF/CFK gemeinsam in den Reaktorraum eingetragen.

In einer Ausführungsform erfolgt in Variante ii) die Eintragung von gasförmigen Sauerstoff in den Reaktorraum während des Erhitzens der Reaktionsmischung.

In einer Ausführungsform erfolgt die Eintragung des gasförmigen Oxidationsmediums nachdem die die schmelzflüssige Schlackenphase erhalten wurde.

In einer Ausführungsform ist das Metall des mindestens einen Metalloxids ausgewählt aus Metallen, die in mehreren, bevorzugt mindestens drei, Oxidationsstufen vorliegen können. Vorteilhaft können diese Metalloxide Sauerstoff reversibel abgeben. Diese Metalloxide werden auch aktive Komponenten genannt.

In einer Ausführungsform ist das mindestens eine kohlenstoffoxidierende Metalloxid in der Schlacke oder in mindestens einer Schlacke enthalten. In einer Ausführungsform ist die Schlacke bzw. das Schlackensystem ausgewählt aus Cu-CuO-Cu₂O, Fe-FeO-Fe₂O₃, Pb-PbO-Pb₃O₄, Ni-NiO, CO-Co₂O₃-CoO-Co₃O₄, CuO-Cu₂O, W-W2O-WO-WO₃, Mo-MoO-MoO2-MoO₃, Sn-SnO-SnO₂, Cr₂O_{3,} Zn-ZnO, Mn-MnO-MnO₂

Erfindungsgemäß führt die Anwesenheit des mindestens einen kohlenstoffoxidierenden Metalloxids zu einer karbothermischen Reduktion dieses Metalloxids zum entsprechenden Metall oder einem weiteren Metalloxid mit niedrigerer Oxidationszahl.

Dies sei beispielhaft anhand der Gleichungen 4 bis 7 gezeigt:
CuO wird durch die CF/CFK reduziert, während der Kohlenstoff oxidiert wird (Gleichung 4). Ebenso wird Cu₂O durch die CF/CFK zu Cu reduziert (Gleichung 5). Cu₂O und teilweise Cu reagieren durch den eingetragenen Sauerstoff, z.B. mit einer Oxidationsgasblase (O₂, Luft oder angereicherte Luft), insbesondere an der Grenzfläche der Schlacke, wieder zu CuO (Gleichungen 6 und 7).

C_{(CF/CFK)} + 2 CuO_{(Schlacke)} → Cu₂O_{(Schlacke)} + CO_{(Gas)} (4)

C_{(CF/CFK)} + Cu₂O_{(Schlacke)} → 2 CU_{(Metal mit der Schlacke gemischt)} + CO_{(Gas)} (5)

2 Cu_{(Metal mit der Schlacke gemischt)} + O_{2 (Gas)} → Cu₂O_{(Schlacke)} (6)

Cu₂O_{(Schlacke)} + 0,5 O_{2(Gas)} → 2 CuO_{(Schlacke)} (7)

Es werden also das mindestens eine Metalloxid durch den Kohlenstoff zu dem jeweiligen Metall und/oder Metalloxid mit niedrigerer Oxidationsstufe reduziert, während dieser oxidiert. Das so gebildete reduzierte Metalloxid und/oder Metall wird durch den optional über das gasförmige Oxidationsmedium eingetragenen Sauerstoff wieder oxidiert. Vorteilhaft ist dabei eine Kreislaufführung möglich. Vorteilhaft muss dabei nur wenig Metalloxid eingesetzt werdenWenn a) und b) kombiniert werden, beträgt der Anteil des Metalloxids 5 bis 100% der Gesamtmasse der Schlacke.

In einer Ausführungsform ist die Schlacke, enthaltend mindestens ein Metalloxid eine Kalziumferrit-Schlacke. In einer Ausführungsform enthält die Schlacke 14-16 wt.-% Cu, 40-55 wt.-% Fe und 15-20 wt.-% CaO. In einer Ausführungsform ist in der Kalziumferritschlacke Eisen als Fe³⁺ vorhanden. Dabei finden zusätzlich zu den Reaktionen 1-7 auch die Reaktionen 8-10 statt.

C_{(CF/CFK)} + Fe₂O_{3(Schlacke)} → 2 FeO_{(Schlacke)} + CO_{(Gas)} (8)

CO_{(Gas)} + Fe₂O_{3(Schlacke)} → 2 FeO_{(Schlacke)} + CO_{2(Gas)} (9)

2FeO_{(Schlacke)} + 0,5 O_{2(Gas)} → Fe₂O_{3(Schlacke)} (10)

Vorteilhaft ist in Metalloxidhaltigen-Schlacken durch die hohe Konzentration von Metalloxiden, die Sauerstoff abgeben können, eine effiziente thermische Verwertung von CF/CFK möglich.

In einer Ausführungsform wird das mindestens eine in der Schlacke/und oder Schlackenbildner und/oder in der schmelzflüssigen Schlackenphase enthaltene kohlenstoffoxidierende Metalloxid mittels eines oxidativen Mediums wie Sauerstoff, z.B. gasförmiger Sauerstoff weiter oxidiert (siehe beispielsweise Gleichung 10) In einer Ausführungsform entsteht dabei neues, durch Kohlenstoff reduzierbares Metalloxid. Vorteilhaft ist somit eine Kreislaufführung möglich.

Vorteilhaft ist damit wieder neues Metalloxid vorhanden, um beispielsweise Reaktion 8 erneut zu ermöglichen.

In einer Ausführungsform ist die Metalloxid enthaltende Schlacke ausgewählt aus Eisencalciumsilikat- (Ferrous-Calcium Silicate "FCS") Schlacken (FeOₓ-CaO-SiO (FeOx-CaO-SiO₂). Vorteilhaft ist eine FCS Schlacke weniger aggressiv gegenüber Mauerwerk.

Vorteilhaft können im erfindungsgemäßen Verfahren metalloxidhaltige Schlacken und/oder Schlackenbildner zur Gewinnung der jeweiligen reinen Metalle eingesetzt werden. Weiterhin vorteilhaft wird die Metalloxidhaltige Schlacke und/oder Schlackenbildner an dem Metalloxid des gewonnenen Metalls abgereichert oder sogar davon bereinigt. Vorteilhaft kann die dabei entstehende glasige Sekundärschlacke beispielsweise als Rohstoff für Glasprodukte weiterverwendet werden.

In einer Ausführungsform enthält die Schlacke und/oder Schlackenbildner und/oder die schmelzflüssige Schlackenphase mindestens ein Metalloxid, welches durch den Kohlenstoff der CF/ CFK zum Metall reduziert wird. Der Kohlenstoff reagiert dabei zunächst zu CO. Die Oxidation des CO mit weiterem Metalloxid führt zur Bildung von weiterem Metall und CO₂, welches wiederum mit CF/CFK zu CO umgesetzt werden kann. Vorteilhaft werden die CF/ CFK somit vollständig umgesetzt.

Da das flüssige Metall eine höhere Dichte hat, als die schmelzflüssige Schlackenphase, setzt es sich als Metallphase am Boden des Reaktionsraums ab und kann abgetrennt werden. In einer Ausführungsform wird das Metall durch Abtrennung von der nun an von diesem Metalloxid abgereicherten oder von diesem Metalloxid freien Schlacke gewonnen.

In einer Ausführungsform erfolgt die Abtrennung durch Stehenlassen der Reaktionsmischung, wobei eine Phasentrennung stattfindet Das Metall kann über ein Abstichloch aus dem Reaktorraum abgelassen werden. Der Reaktorraum wird dann wieder geschlossen bevorauch die Schlacke anfängt, aus dem Ausstichloch auszutreten.

In einer Ausführungsform kann das erfindungsgemäße Verfahren z.B. der Bleigewinnung dienen. Die dabei ablaufenden Reaktionen sind in den Gleichungen 11 und 12 dargestellt.

In einer Ausführungsform ist das mindestens eine Metalloxid PbO. Dieses reagiert bei Temperaturen von 1150 bis 1250 °C mit dem Kohlenstoff der CF/CFK.

PbO_{(Schlacke)} + C_{CF/CFK} → Pb_{(Metall)} + CO_{(Gas)} (11)

PbO_{(Schlacke)} + CO_{(Gas)} → Pb_{(Metall)} + CO_{2(Gas)} (12)

CO_{2(Gas)} + C_{CF/CFK} → 2CO_{(Gas)} (3)

In einer Ausführungsform ist das mindestens eine Metalloxid ZnO, beispielsweise in bleihaltigen Schlacken.

In einer Ausführungsform, insbesondere bei diskontinuierlicher Prozessführung, ist entweder von Anfang an genug Sauerstoff im Metalloxid enthalten, um die CF und/oder CFK zu oxidieren, oder es wird während des Prozesses Sauerstoff zugegeben und das Metalloxid als aktive Komponente verwendet.

Wenn man das Metall gleichzeitig gewinnen möchte (z.B. Eisen aus Eisenoxiden) ist es nicht ratsam, es als aktive Komponente zu nutzen, weil keine Rückoxidation zum FeO/Fe₂O₃ gewünscht ist. Liegt das Verbrennen/Oxidieren der CF und/oder CFK im alleinigen Fokus ist eine aktive Komponente sinnvoll.

In einer Ausführungsform werden die im Reaktorraum entstehenden Gase aus dem Reaktorraum geleitet. In einer Ausführungsform wird die Zusammensetzung der ausgeleiteten Gase analysiert um darüber die Höhe des Sauerstoffpartialdrucks im Reaktorraum zu bestimmen.

In einer Ausführungsform werden die ausgeleiteten Gase aufgefangen und aufgearbeitet. Vorteilhaft kann so eine vollständige Verwertung aller eingesetzten Stoffe erfolgen

In einer Ausführungsform verdampft das entstehende Metall während des Verfahrens und wird mit den weiteren gebildeten Gasen zusammen aus dem Reaktorraum ausgeleitet. In einer Ausführungsform wird das gasförmige Metall in den Abgasen oxidiert und kann anschließend aus der Gasphase gewonnen werden. Dieser Prozess ist als Fuming (Verblasen) bekannt. In einer Ausführungsform erfolgt die Aufarbeitung des Metalloxids elektrolytisch zum Metall.

Gegenstand der Erfindung ist auch die Verwendung des erfindungsgemäßen Verfahrens zur Verwertung und/oder Entsorgung von CF/CFK.

Gegenstand der Erfindung ist auch die Verwendung einer schmelzflüssigen Schlackenphase zur Verwertung und/oder Entsorgung von CF und/oder CFK.

Vorteilhaft kann das erfindungsgemäße Verfahren in der metallurgischen Industrie durch CF/CFK als wirtschaftliche Reduktionsmittel angewendet werden. Durch die Einsparung von Brennstoffen wie Kohle oder Koks ist das Verfahren zudem ökologsch vorteilhaft. Dabei kommen alle pyrometallurgischen Aggregate die bei hohen Temperaturen Metalle reduzieren in Frage (Stahlindustrie, Zinkindustrie, Bleiindustrie, Zinnindustrie, Kupferindustrie etc.).

Das erfindungsgemäße Verfahren kann auch in einer speziell ausgestatteten thermischen Verwertungsanlage angewandt werden, die einen Prozess mit Schlackeneinsatz betreibt. Dies ist für die notwendigen gleichmäßigen Temperaturen sowie die Reaktivität der Schlacken erforderlich, da selbst Sondermüllverbrennungsanlagen nach Stand der Technik CF nicht thermisch verwerten können.

Für die Realisierung der Erfindung ist es auch zweckmäßig, die vorbeschriebenen Ausführungsformen und Merkmale der Ansprüche zu kombinieren. Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

Nachfolgend soll die Erfindung anhand von Ausführungsbeispielen erläutert werden. Dies ist jedoch nicht beschränkend.

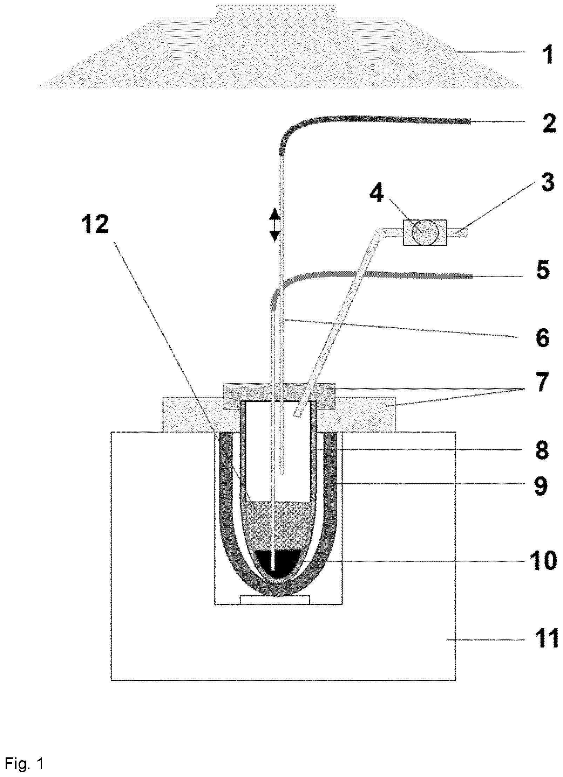

Dabei zeigt Fig. 1 den experimentellen Aufbau des Ausführungsbeispiels 1.

### Ausführungsbeispiel 1

Unter einem Abzug (1) werden im Reaktionsraum eines Induktionsofens (11) mit Al₂O₃ Tiegel (8) und einem inneren SiC-Tiegel (9) mit Deckel und Isolierung (7) 66 g Carbonfasern (10) in Form von CF Pulver (<150 µm Faserlänge, 7µm Durchmesser) und CF-Fasern (6 mm Faserlänge, 7µm Durchmesser) vorgelegt. Auf die Carbonfasern wird 500 g fayalitische Schlacke (12) geschichtet und zusammen auf 1400°C erhitzt, wobei die Erhitzung mittels eines Thermoelements (5) erfolgt. Daraufhin steigen die CF durch die schmelzflüssige Schlacke hindurch nach oben und werden oxidiert.

Die Atmosphäre wird durch Argonzugabe über eine Argonzufuhr (2) mittels Argonlanze (6) kontrolliert. Die Erhitzung erfolgt zunächst 2 h ohne Gaseintrag in die schmelzflüssige Schlackephase.

Während des Experiments werden die aus dem Reaktionsraum austretenden Gase durch einen Filter (4) geleitet und über einen CO/CO₂- Gasanalysator (3) analysiert und der Reaktionsverlauf so beobachtet. Wenn Reaktion abnimmt (gemessen über CO/CO₂-Messung) wird die Lanze in die Schmelze gesenkt, um den Gaseintrag in die Reaktionsmischung zu lenken, um die Schlacke weiterhin mit den CF/CFK in Verbindung zu halten. Der Gaseintrag erfolgt für 2 h in die Reaktionsmischung, womit diese zusätzlich durchmischt wird

Anschließend wird eine Analyse der Reaktionsprodukte mittels RFA der Schlacke, ICP-OES und CS Analyse der Metallphase durchgeführt.

Dabei wurde ein Umsatz von über 90% der CF erreicht.

Bis zu 75% des in der Schlacke enthaltenen Eisens wurden reduziert. Somit werden die Carbonfasern in diesem Prozess stofflich verwertet

Der Umsatz konzentrierte sich dabei auf die "turbulente Stufe" des Experiments, in dem die Fasern durch die nun geschmolzene obenliegende Schlackenschicht aufsteigen, sowie die Phase in der durch die Lanze Turbulenz erzeugt wird. In einem TSL, Mitsubishi, Noranda, Teniente, SKS Aggregat, bei dem durch die vorherrschende Turbulenz diese Durchmischung ständig aufrechterhalten wird, ist eine höhere Reaktionsrate während der gesamten Reaktionsdauer möglich.

### Bezugszeichen

1. Abzug
2. Ar-Zufuhr
3. CO/CO₂ Gasanalysator
4. Filter
5. Thermoelement
6. Ar-Lanze
7. Deckel und Isolierung
8. Al₂O₃-Tiegel
9. SiC-Tiegel
10. CF/ CFK
11. Induktionsofen
12. Fayalitische Schlacke

## Patentansprüche

1. Verfahren zur Verwertung und/oder Entsorgung von kohlenstoffhaltigen Carbonfasern (CF) und carbonfaserhaltigen und/oder carbonfaserverstärkten Kunststoffen (CFK) in metallurgischen Schlackensystemen, durch Oxidation des Kohlenstoffs in einer schmelzflüssigen Schlackenphase, wobei
in Variante i)
mindestens eine Schlacke und/oder mindestens ein Schlackenbildner und/oder mindestens eine schmelzflüssige Schlacke in einem Reaktorraum eines geeigneten Aggregats auf eine Temperatur von 1000 bis 2500°C gebracht werden, um eine schmelzflüssige Schlackenphase zu erhalten
und
CF und/oder CFK in und/oder auf die schmelzflüssige Schlackenphase eingebracht und mit dieser zu einer Reaktionsmischung gemischt werden,
wobei eine kontinuierliche Durchmischung der Reaktionsmischung unter Bildung von Turbulenzen erfolgt, wobei der Kohlenstoff der CF und/oder CFK zu CO und/oder CO₂ oxidiert wird,
oder in Variante ii)
mindestens eine Schlacke und/oder mindestens eine schmelzflüssige Schlacke und/oder mindestens ein Schlackenbildner und CF und/oder CFK zusammen in einem Reaktorraum eines geeigneten Aggregats auf eine Temperatur von 1000 bis 2500°C gebracht werden, um eine Reaktionsmischung, umfassend eine schmelzflüssige Schlackenphase und CF und/oder CFK, zu erhalten,
wobei eine kontinuierliche Durchmischung der Reaktionsmischung unter Bildung von Turbulenzen erfolgt, wobei der Kohlenstoff der CF und/oder CFK zu CO und/oder CO₂ oxidiert wird,
**dadurch gekennzeichnet, dass** in beiden Varianten i) und ii)
a) mindestens eine Schlacke und/oder mindestens ein Schlackenbildner und/oder mindestens eine schmelzflüssige Schlacke und/oder mindestens eine schmelzflüssige Schlackenphase
mindestens ein durch Kohlenstoff reduzierbares Metalloxid enthält und/oder zugegeben wird
und dass das Vermischen zu einer Reaktionsmischung und/oder das Durchmischen der Reaktionsmischung durch Rühren und/oder Wenden der Reaktionsmischung und/oder Einblasen eines Gases in die Reaktionsmischung erfolgt,
wobei das Aggregat ausgewählt ist aus TSL-(Top Submerged Lance)-Öfen, BBOC-(Bottom Blown Oxygen Converter)-Öfen, Top Blown Rotary Converter-(TBRC)-Öfen, Pierce-Smith Konverter-Öfen, Noranda-Teniente-Schmelzofen, Mitsubishi-Ofen "Top Jetting Lance furnace", SKS (Shuikoushan)-Ofen, Queneau-Schuhmann-Lurgi-(QSL)-Ofen.

2. Verfahren nach Anspruch 1, wobei als Option b) gasförmiger Sauerstoff in den Reaktorraum eingebracht wird.

3. Verfahren nach einem der Ansprüche 1 oder 2, wobei die Schlacke ausgewählt ist aus Schlacken der Zusammensetzung Al₂O₃-SiO₂-CaO, Cu₂O-CaO-Fe₃O₄, FeOₓ-CaO-SiO₂ und FeOₓ-SiO₂-Al₂O₃-CaO-MgO.

4. Verfahren nach Anspruch 1 bis 3, wobei der mindestens ein Schlackenbildner ausgewählt ist aus Oxiden, bevorzugt ausgewählt aus Al₂O₃, CaO, SiO₂, Fe₂O₃, FeO, Fe₃O₄, MgO, PbO, CuO, Cu₂O, B₂O₃, Na₂O und Mischungen dieser.

5. Verfahren nach einem der Ansprüche 1 bis 4, wobei in Variante i) die Einbringung der CF und/oder CFK über eine Lanze und/oder mindestens eine Düse erfolgt, die in die schmelzflüssige Schlackenphase hineinragt.

6. Verfahren nach einem der Ansprüche 1 bis 5, wobei während des Verfahrens nach Option a) der Sauerstoffpartialdruck kontrolliert und bevorzugt so eingestellt wird, dass der Sauerstoffpartialdruck im Reaktorraum < 0,01 kPa beträgt.

7. Verfahren nach einem der Ansprüche 1 bis 5, wobei während des Verfahrens nach Option b) der Sauerstoffpartialdruck kontrolliert und bevorzugt so eingestellt wird, dass der Sauerstoffpartialdruck im Reaktorraum > 10,1 kPa beträgt.

8. Verfahren nach Anspruch 6 oder 7, wobei CO und CO₂ als Reaktionsgase aus dem Reaktorraum geleitet und das Verhältnis der Menge an CO zu CO₂ analysiert wird, um darüber die Höhe des Sauerstoffpartialdrucks im Reaktorraum zu bestimmen.

9. Verfahren nach einem der Ansprüche 1 bis 8, wobei das mindestens eine durch Kohlenstoff reduzierbare Metalloxid ausgewählt ist aus Fe₂O₃, FeO, Fe₃O₄, NiO, CoO, Co₃O₄, CuO, Cu₂O, SnO, SnO₂, PbO, Pb₃O₄, PbO₂, Cr₂O₃ ZnO, MnO, und/oder MnO₂.

10. Verfahren nach einem der Ansprüche 1 bis 9, wobei kontinuierlich mindestens ein durch Kohlenstoff reduzierbares Metalloxid zur Reaktionsmischung zugegeben wird.

11. Verfahren nach einem der Ansprüche 1 bis 10, wobei der Sauerstoff zur Oxidation des Kohlenstoffs aus dem mindestens einem kohlenstoffoxidierenden Metalloxid stammt.

12. Verfahren nach einem der Ansprüche 1 bis 11, wobei das Metall aus der Reaktionsmischung abgetrennt wird.

13. Verwendung eines Verfahrens nach einem der Ansprüche 1 bis 12 zur Verwertung und/oder Entsorgung von CF und/oder CFK.

14. Verwendung einer schmelzflüssigen Schlackenphase zur Verwertung und/oder Entsorgung von CF und/oder CFK in einem Verfahren nach einem der Ansprüche 1 bis 12.
